# EUROPÄISCHE PATENTSCHRIFT

(11) **EP 2 907 381 B1**
(45) Veröffentlichungstag und Bekanntmachung des Hinweises auf die Patenterteilung: **13.07.2016**
(21) Anmeldenummer: 14000557.0
(22) Anmeldetag: 17.02.2014
(51) Int. Cl.: A01K 31/16

(54) **Haltungseinrichtung für Legehennen**
Keeping facility for laying hens
Installation pour poules pondeuses

(43) Veröffentlichungstag der Anmeldung: 19.08.2015
(73) Patentinhaber: Fienhage, Hans-Jürgen, 49424 Lutten (DE)
(72) Erfinder: Rensing, Frank, 49429 Visbek (DE); Yousef, Ramzy, 6600 AC Wijchen (NL)
(74) Vertreter: Heiland, Karsten

(56) Entgegenhaltungen:
- EP-A1- 0 116 008
- WO-A1-89/03637
- US-A- 1 911 633
- US-A- 3 242 904
- US-A- 4 364 332
- US-A- 5 365 878

## Beschreibung

Die Erfindung betrifft eine Haltungseinrichtung für Legehennen, mit wenigstens einer Legenesteinheit nach dem Prinzip von Handsuchnestern, gemäß dem Oberbegriff des Anspruchs 1 (siehe z.B. US 3 242 904 A).

Ein typisches Handsuchnest ist im Wesentlichen quaderförmig aufgebaut mit einer teilweise offenen, großen Vorderseite als Eingang, einer geschlossenen Rückseite, geschlossenen Stirnseiten, einer Bodenseite und einer Oberseite. Im Bereich der Oberseite kann eine fest installierte Oberwand oder eine öffenbare Deckelwand vorgesehen sein. Vorzugsweise sind Oberwand bzw. Deckelwand zur Vorderseite hin abwärts geneigt. Entsprechend weisen die Stirnseiten oben jeweils eine Schräge auf. Im Bereich der Vorderseite ist ein Anflugbalkon vorgesehen, damit die Hühner an der Vorderseite eine Standfläche haben, von der sie in das Handsuchnest gelangen können.

Eine Bodenwand ist geneigt angeordnet, damit die gelegten Eier zu einer Eiersammelfläche an der Vorderseite rollen und dort manuell entnommen werden können. Ein Nachteil dabei ist, dass die Eier eine relativ lange Wegstrecke rollen, da sich die Hühner beim Eierlegen überwiegend nahe der Rückseite aufhalten.

Zur Vermeidung des genannten Nachteils ist es bereits bekannt, die Bodenwand zur Rückseite hin geneigt anzuordnen. Entsprechend sammeln sich die Eier auf einer Eiersammelfläche im Bereich der unten offenen Rückseite und können dort manuell entnommen werden. Nachteil dieser Lösung ist, dass ein derartiges Handsuchnest nicht an einer Wand positioniert werden kann, da die Eiersammelfläche an der Rückseite zugänglich bleiben muss. Der Raumbedarf ist relativ hoch.

Die US 1,911,633 aus dem Jahr 1929 zeigt eine Legenesteinheit mit Rücken an Rücken einander gegenüberliegenden Legenestern. Nestböden sind in Richtung auf eine mittige Eiersammelfläche geneigt.

Aufgabe der vorliegenden Erfindung ist die Schaffung einer Haltungseinrichtung mit Legenesteinheiten nach dem Prinzip von Handsuchnestern, bei der die genannten Nachteile überwunden werden.

Zur Lösung der Aufgabe weist die erfindungsgemäße Haltungseinrichtung die Merkmale des Anspruchs 1 auf. Die Legenesteinheit ist mit zwei zueinander benachbarten Legenestern versehen. Die Legenester stehen mit ihren Rückseiten zueinander oder weisen eine gemeinsame Rückseite auf, die die beiden Legenester im Übrigen voneinander trennt. In einem Bereich zwischen den Legenestern, unterhalb der Rückseite oder der Rückseiten ist wenigstens eine Eiersammelfläche vorgesehen. Die Eiersammelfläche ist somit im Wesentlichen mittig zwischen den Legenestern angeordnet , und kann dabei auch leicht nach unten versetzt sein. Die Eier können von den Nestböden beider Legenester auf die Eiersammelfläche rollen und von dort manuell entnommen werden. Die erfindungsgemäße Haltungseinrichtung ist platzsparend. Zugleich rollen die Eier nur einen kurzen Weg bis zur Eiersammelfläche.

Nach einem weiteren Gedanken der Erfindung weisen die Eiersammelflächen im Bereich von Übergängen zwischen Nestböden und Eiersammelfläche anhebbare Trennwände auf. Mit den Trennwänden ist die Eiersammelfläche von umgebenden Vorrichtungsteilen abtrennbar, so dass die Eier nicht von der Eiersammelfläche rollen können. Dies ist insbesondere dann vorteilhaft, wenn die Eiersammelfläche herausziehbar ist.

Vorteilhafterweise ist eine gemeinsame Eiersammelfläche für die beiden Legenester einer Legenesteinheit vorgesehen. Alternativ können auch zwei Eiersammelflächen nebeneinander vorgesehen sein.

Vorzugsweise sind zwei in Längsrichtung aufeinanderfolgende Eiersammelflächen für vier Halbnester einer Legenesteinheit vorgesehen. Die Legenesteinheit weist vier Halbnester auf. Die beiden Eiersammelflächen folgen entlang einer Linie aufeinander. Zwei Halbnester liegen auf der einen Seite der Linie und zwei Halbnester auf der anderen Seite.

Nach einem weiteren Gedanken der Erfindung sind Mittel zum Ausfördern von Eiern aus dem Bereich zwischen den Legenestern vorgesehen. Beispielsweise können die Eiersammelflächen bewegbar sein. Alternativ können Mittel zum Verschieben der Eier auf den Eiersammelflächen vorgesehen sein.

Nach einem weiteren Gedanken der Erfindung ist die Eiersammelfläche in ihrer Längsrichtung aus dem Bereich zwischen den Legenestern herausziehbar. Die Eier liegen auf der Eiersammelfläche und gelangen zusammen mit dieser aus dem Bereich zwischen den Legenestern heraus.

Erfindungsgemäß kann die Eiersammelfläche eine zwischen den Legenestern gehaltene Schublade sein. Die Schublade ist seitlich oder unterseitig geführt und zumindest teilweise oder ganz herausziehbar.

Erfindungsgemäß können die Trennwände bewegbar sein zwischen einer oberen Position, in der Nestböden und Eiersammelfläche durch die Trennwände voneinander getrennt sind, und einer unteren Position, in der die Trennwände versenkt sind, so dass Eier von den Nestböden auf die Eiersammelfläche rollen können.

Nach einem weiteren Gedanken der Erfindung können Mittel zum Anheben der Trennwände in Abhängigkeit von der Bewegung der Eiersammelfläche vorgesehen sein. Ziel ist eine Kopplung insbesondere derart, dass die Trennwände abgesenkt sind, solange die Eiersammelfläche in einer Position zum Sammeln der Eier ist, und dass die Trennwände angehoben sind, sobald die Eiersammelfläche aus der zuvor genannten Position herausbewegt wird.

Vorteilhafterweise sind Trennwände und Eiersammelfläche über Nocken und Kurvenkonturen miteinander gekoppelt, derart, dass bei Bewegung der Eiersammelfläche Nocken und Kurvenkonturen aneinander vorbeigleiten und dabei die Trennwände angehoben oder abgesenkt werden. Dadurch ist es möglich die Trennwände automatisiert in die obere Position oder in die untere Position zu bewegen.

Erfindungsgemäß können die Trennwände untere Ränder mit Kurvenkonturen aufweisen, wobei die Legenesteinheit mit insbesondere ortsfest angeordneten Nocken versehen ist, welche unten an den Kurvenkonturen anliegen. Untere Ränder der Trennwände sind dabei als Kurvenkonturen ausgebildet, so dass kein zusätzlicher apparativer Aufwand erforderlich ist.

Erfindungsgemäß können die Trennwände entlang ihrer unteren Ränder jeweils wenigstens zwei Einbuchtungen oder Ausschnitte aufweisen, in denen die Nocken entlang gleiten. Die Legenesteinheit weist hierzu korrespondierende Nocken auf, somit vorzugsweise wenigstens zwei je Trennwand. Dadurch ist es möglich, jede Trennwand an mindestens zwei Punkten stabil anzuheben. Vorzugsweise sind die beiden Einbuchtungen je Trennwand hierzu mit ausreichendem Abstand zueinander und außermittig angeordnet.

Nach einem weiteren Gedanken der Erfindung können die Trennwände vertikal gerichtete Langlöcher als Führungsmittel aufweisen. In den Langlöchern sitzen an Nestwänden gehaltene Bolzen. Die Auf- und Abbewegungen der Trennwände sind durch die Bolzen geführt.

Nach einem weiteren Gedanken der Erfindung können die Legenester vorderseitig hochklappbare Anflugbalkone aufweisen. Die Anflugbalkone sind vorzugsweise so dimensioniert, dass sie in der hochgeklappten Position Eingänge der Legenester ganz oder überwiegend bedecken oder versperren.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
Fig. 1 eine Legenesteinheit in perspektivischer Ansicht schräg von oben und mit an einer Seite hochgeklapptem Anflugbalkon und mit teilweise herausgezogener Eiersammelfläche,

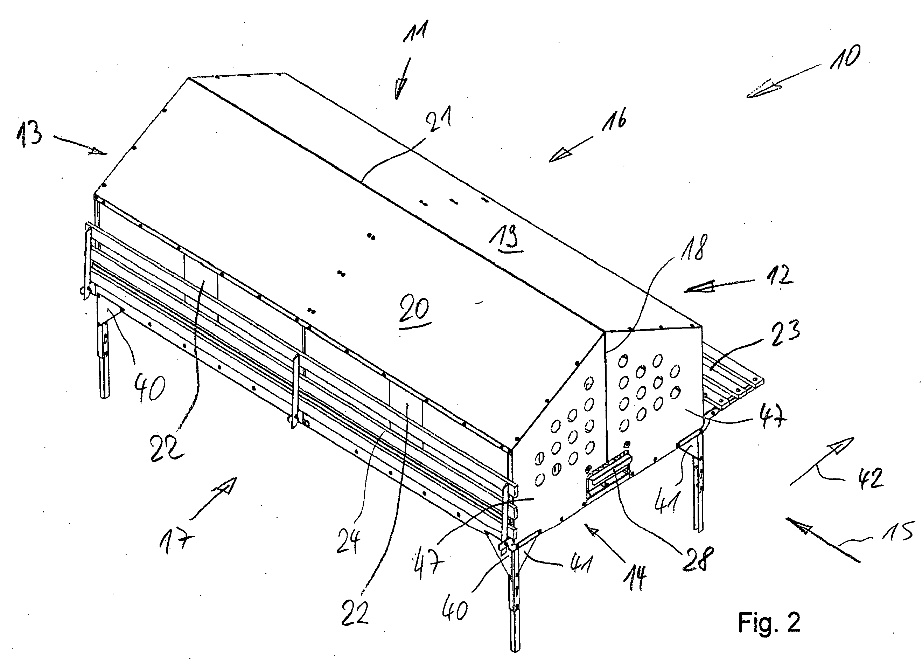

Fig. 2 die Legenesteinheit gemäß Fig. 1, jedoch mit an der gegenüberliegenden Seite hochgeklapptem Anflugbalkon und mit eingeschobener Eiersammelfläche,
Fig. 3 die Legenesteinheit gemäß Fig. 2 in einer Stirnseitenansicht,
Fig. 4 eine Ansicht analog Fig. 3, jedoch mit einwärts geklappten Gestellverlängerungen,
Fig. 5 einen Längsschnitt durch die Legenesteinheit gemäß Fig. 3 entlang der Linie V-V,
Fig. 6 ein vergrößertes Detail aus Fig. 5, nämlich den Kreis VI,
Fig. 7 ein weiteres vergrößertes Detail aus Fig. 5, nämlich den Kreis VIII.

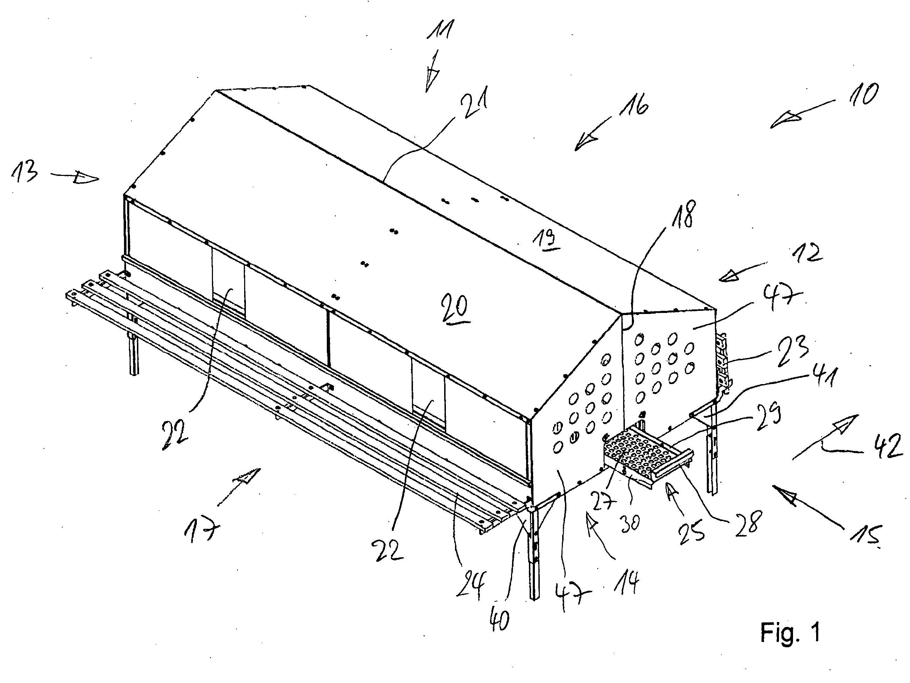

Fig. 1 zeigt eine Legenesteinheit 10, hier bestehend aus vier Halbnestern 11, 12, 13, 14. In Längsrichtung - Pfeil 15 - aufeinanderfolgende Halbnester 11, 12 bilden zusammen ein Legenest 16, während die Halbnester 13, 14 ein Legenest 17 bilden.

Die beiden Legenester 16, 17 stoßen an ihren Rückseiten aneinander und sind über eine gemeinsame Rückwand 18 miteinander verbunden. Jedes Legenest 16, 17 weist eine rechteckige, geneigte Dachfläche 19, 20 auf. Die beiden Dachflächen 19, 20 bilden zusammen ein Satteldach für die Legenesteinheit 10 mit einer Firstlinie 21 im Bereich einer nicht gezeigten Oberkante der Rückwand 18.

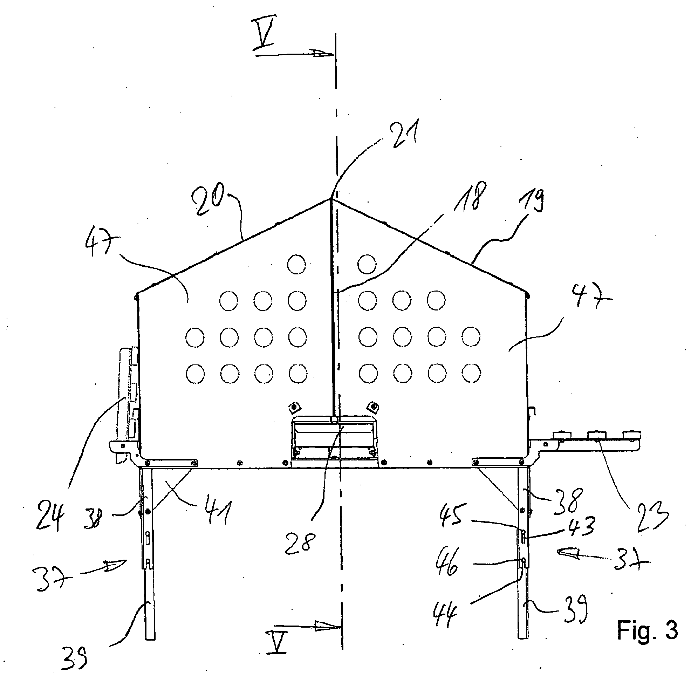

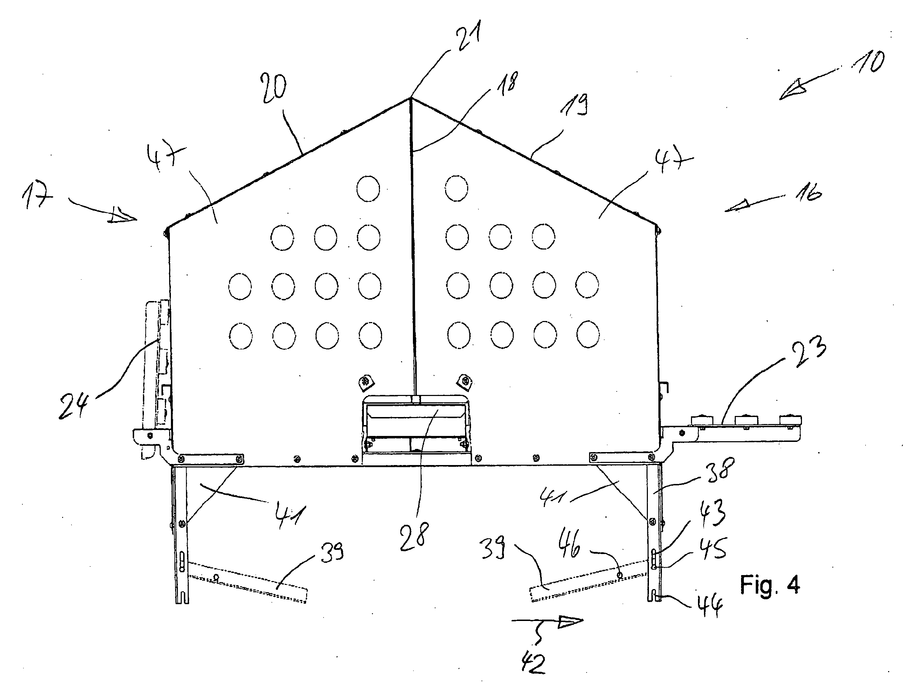

Die Legenester 16, 17 weisen vorderseitig Eingänge 22 für nicht gezeigte Legehennen auf. Vor den Eingängen 22 sind Anflugbalkone 23, 24 vorgesehen, die sich jeweils über die volle Länge der Legenester 16, 17 erstrecken. Außerdem sind die Anflugbalkone 23, 24 klappbar aus der in den Figuren 3 und 4 rechts gezeigten, horizontalen Anflugstellung, siehe Anflugbalkon 23, in die in den Fig. 3 und 4 links gezeigte, aufrechte Sperrstellung, siehe Anflugbalkon 24. In der Sperrstellung sind die Eingänge 22 ganz oder überwiegend verdeckt durch die Anflugbalkone.

Etwa mittig, unterhalb der Rückwand 18 sind hier zwei in Längsrichtung (Pfeil 15) aufeinanderfolgende Eiersammelflächen vorgesehen. Diese sind hier als Schubladen 25, 26 ausgebildet, nämlich mit einem gelochten Boden 27, stirnseitigem Griff 28 zum Herausziehen und seitlichen Trennwänden 29, 30. Die Rückwand 18 reicht nicht ganz bis zu einer Unterseite der Legenesteinheit hinab.

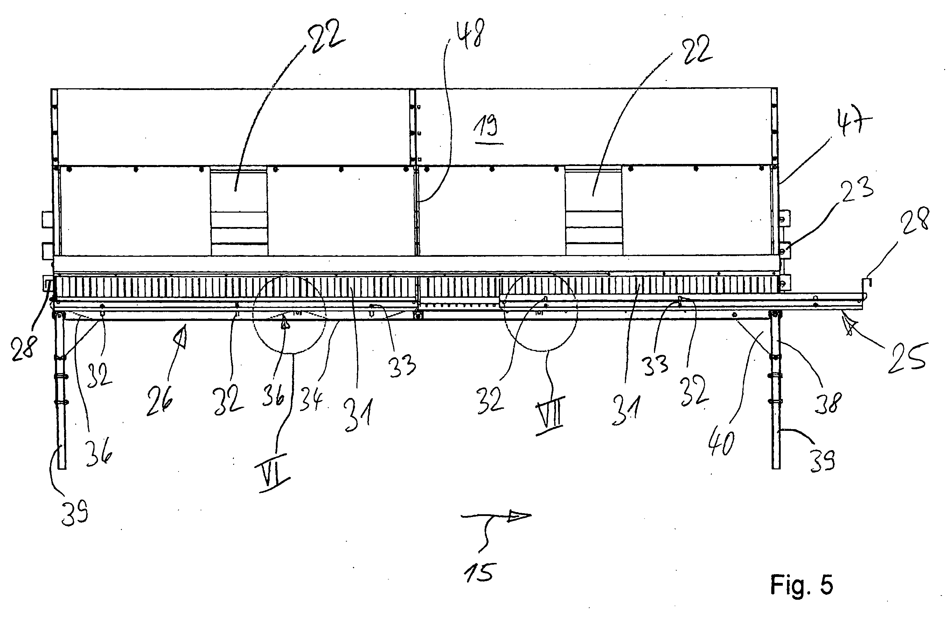

Die Schublade 25 erstreckt sich über die halbe Länge der beiden Legenester 16, 17 und läuft in einer entsprechenden Führung oder Ausnehmung unterhalb der Rückwand 18. Jedes Halbnest 11 bis 14 weist vor den Trennwänden 29, 30 der Schubladen einen Fransenvorhang 31 auf, siehe insbesondere Fig. 5. Nicht gezeigte Böden der Halbnester 11 bis 14 sind leicht geneigt ausgebildet und angeordnet, so dass Eier von den Böden auf die gelochten Böden 27 rollen können. Der Fransenvorhang 31 ist so flexibel und nachgiebig, dass die Eier passieren können. Nach dem Passieren liegen die Eier auf den gelochten Böden 27 und sind für die Legehennen nicht mehr sichtbar.

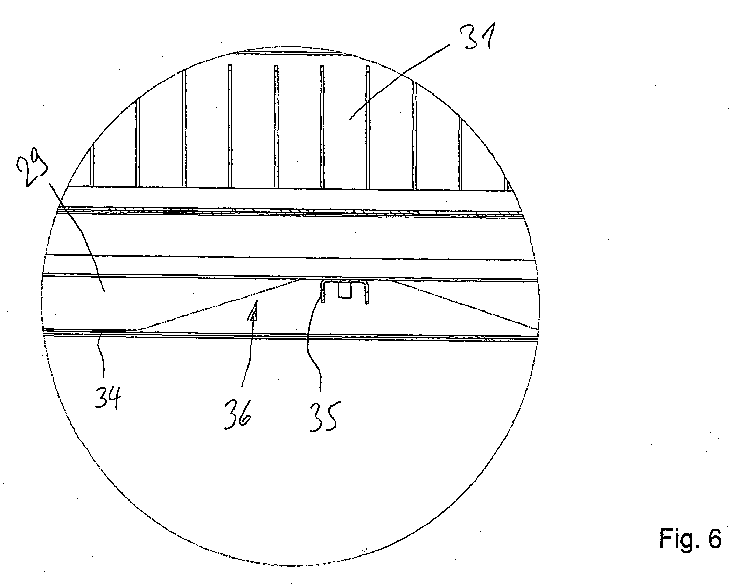

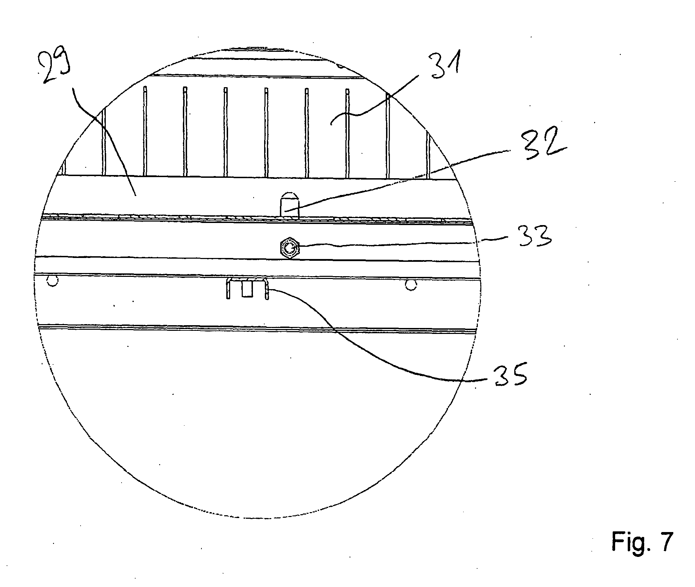

Die Schubladen 25, 26 sind teilweise oder vollständig aus der Legenesteinheit 10 herausziehbar. Die Eier können dann bequem der jeweiligen Schublade entnommen werden. Dabei verhindern die Trennwände 29, 30 ein Herabrollen der Eier vom gelochten Boden 27. Damit die Eier trotz der Trennwände 29, 30 auf die Schubladen 25, 26 gelangen können, sind die Trennwände 29, 30 vertikal bewegbar zwischen einer unteren, inaktiven Position und einer oberen Wirkposition. Die inaktive Position ist in Fig. 5 links und in Fig. 6 gezeigt, während die Wirkposition in Fig. 5 rechts und in Fig. 7 erkennbar ist.

Die inaktive Position ist stets gegeben, sobald die Schublade 25, 26 in die Legenesteinheit 10 eingeschoben ist, siehe Fig. 5 links, während die Wirkposition der Trennwände 29, 30 automatisch angenommen wird, sobald die Schublade auch nur ein Stück weit aus der Legenesteinheit 10 herausgezogen wird, siehe Fig. 5 rechts. Um dies zu ermöglichen, weisen die Trennwände vertikal gerichtete Langlöcher 32 auf, die mit an den Schubladen 25, 26 angeordneten Haltebolzen 33 zusammenwirken.

Außerdem weisen die Trennwände 29, 30 in besonderer Weise konturierte untere Ränder 34 auf, welche mit ortsfest an der Legenesteinheit 10 gehaltenen, quer gerichteten Profilen 35 zusammenwirken. Die Profile 35 haben hier die Funktion von Nocken, an denen die unteren Ränder 34 beim Bewegen der Schubladen 25, 26 ablaufen und so das Anheben oder Absenken der Trennwände 29, 30 je nach Stellung der Schubladen bewirken.

Die unteren Ränder 34 sind im Bereich der Profile 35 - bei eingeschobenen Schubladen - mit umgekehrt - V-förmigen Ausschnitten 36 versehen. Beim Herausziehen der Schubladen 25, 26 liegen die Ausschnitte 36 an den Profilen 35 an und bewirken entsprechend ihrer Steigung, siehe insbesondere Fig. 6, das Anheben der Trennwände 29, 30. Auch die Schubladen 25, 26 können mit ihren Unterseiten auf den Profilen liegen.

Bestandteil der Legenesteinheit 10 ist ein Traggestell, hier zumindest mit vier, eckseitig angeordneten Standbeinen 37, jeweils bestehend aus einem oberen Beinabschnitt 38 und einem unteren Beinabschnitt 39. Die oberen Beinabschnitte 38 sind mit Dreieckblechen 40, 41 sowohl in Längsrichtung (Pfeil 15) als auch in Querrichtung - Pfeil 42 - gegenüber einem nicht näher gezeigten Boden oder Rahmen der Legenesteinheit abgestützt. Die unteren Beinabschnitte 39 sind relativ zu den oberen Beinabschnitten 38 einwärts, in Querrichtung einklappbar, siehe Fig. 4. Hierzu weisen die oberen Beinabschnitte 38 jeweils ein Langloch 43 und ein darunter angeordnetes, nach unten offenes Langloch 44 auf. Der jeweils untere Beinabschnitt 39 ist mit einem Bolzen 45 im Langloch 43 schwenkbar gehalten. Zugleich weist der untere Beinabschnitt 39 jeweils einen weiteren Bolzen 46 auf, der in das offene Langloch 44 einschiebbar ist. Die Bolzen 45 und 46 weisen ungefähr den gleichen Abstand zueinander auf wie das Langloch 43 vom offenen Langloch 44.

Die Halbnester 11 bis 14 weisen jeweils eine Stirnwand 47 auf, die zur Belüftung gelocht ausgebildet ist. Zwischen den beiden in Längsrichtung (Pfeil 15) aneinander grenzenden Halbnestern 11, 12 bzw. 13, 14 können aufrechte Stirnwände 48 vorgesehen sein. Alternativ gehen die Halbnester 11, 12 bzw. 13, 14 ohne Trennung ineinander über.

Die beschriebene Legenesteinheit ist als Handsuchnest vorgesehen, d. h., die gelegten Eier werden manuell von der Eiersammelfläche abgenommen. Die Eier werden nicht durch ein Eiersammelband abgefördert. Es ist lediglich die Eiersammelfläche verschiebbar, nämlich hier nach Art einer Schublade ausgebildet, um den Zugang zur Eiersammelfläche zu verbessern.

Das Handsuchnest, wie anhand der Legenesteinheit 10 dargestellt, weist die Vorteile eines Handsuchnestes mit rückseitiger Eiersammelfläche auf. Zugleich ist eine platzsparende Anordnung möglich, da die beiden Legenester 16, 17 Rücken an Rücken zueinanderstehen und eine gemeinsame, mittige Eiersammelfläche aufweisen. Letztere ist überlappend mit beiden Legenestern 16, 17 vorgesehen, so dass diese tatsächlich ohne Abstand zueinander angeordnet sein können.

**Bezugszeichenliste:**

| | | | |
|---|---|---|---|
| 10 | Legenesteinheit | 36 | Ausschnitte |
| 11 | Halbnest | 37 | Standbeine |
| 12 | Halbnest | 38 | Obere Beinabschnitte |
| 13 | Halbnest | 39 | Untere Beinabschnitte |
| 14 | Halbnest | 40 | Dreieckbleche |
| 15 | Pfeil | 41 | Dreieckbleche |
| 16 | Legenest | 42 | Pfeil |
| 17 | Legenest | 43 | Langloch |
| 18 | Rückwand | 44 | Offenes Langloch |
| 19 | Dachfläche | 45 | Bolzen |
| 20 | Dachfläche | 46 | Bolzen |
| 21 | Eingang | 47 | Stirnwände |
| 22 | Eingang | 48 | Stirnwände |
| 23 | Anflugbalkon | | |
| 24 | Anflugbalkon | | |
| 25 | Schublade | | |
| 26 | Schublade | | |
| 27 | Gelochter Boden | | |
| 28 | Griff | | |
| 29 | Trennwand | | |
| 30 | Trennwand | | |
| 31 | Fransenvorhang | | |
| 32 | Langlöcher | | |
| 33 | Haltebolzen | | |
| 34 | Untere Ränder | | |
| 35 | Profile | | |

## Patentansprüche

1. Haltungseinrichtung für Legehennen, mit wenigstens einer Legenesteinheit (10) nach dem Prinzip von Handsuchnestern, wobei die Legenesteinheit (10) zwei zueinander benachbarte Legenester (16, 17) aufweist, die Legenester (16, 17) mit ihren Rückseiten zueinander stehen oder eine gemeinsame Rückseite aufweisen, die die beiden Legenester (16, 17) im Übrigen voneinander trennt, und in einem Bereich zwischen den Legenestern (16, 17), unterhalb der Rückseite oder der Rückseiten, wenigstens eine Eiersammelfläche vorgesehen ist, **dadurch gekennzeichnet, dass** die Eiersammelfläche im Bereich von Übergängen zwischen Nestböden und Eiersammelfläche anhebbare Trennwände (29, 30) aufweist.

2. Haltungseinrichtung nach Anspruch 1, **dadurch gekennzeichnet, dass** eine gemeinsame Eiersammelfläche für die beiden Legenester (16, 17) einer Legenesteinheit (10) vorgesehen ist.

3. Haltungseinrichtung nach Anspruch 1 oder 2, **dadurch gekennzeichnet, dass** zwei in Längsrichtung aufeinanderfolgende Eiersammelflächen für vier Halbnester (11, 12, 13, 14) einer Legenesteinheit (10) vorgesehen sind.

4. Haltungseinrichtung nach Anspruch 1 oder einem der weiteren Ansprüche, **gekennzeichnet durch** Mittel zum Ausfördern von Eiern aus dem Bereich zwischen den Legenestern (16, 17).

5. Haltungseinrichtung nach Anspruch 1 oder einem der weiteren Ansprüche, **dadurch gekennzeichnet, dass** die Eiersammelfläche in ihrer Längsrichtung aus dem Bereich zwischen den Legenestern (16, 17) herausziehbar ist.

6. Haltungseinrichtung nach Anspruch 1 oder einem der weiteren Ansprüche, **dadurch gekennzeichnet, dass** die Eiersammelfläche Teil einer zwischen den Legenestern (16, 17) gehaltenen Schublade (25, 26) ist.

7. Haltungseinrichtung nach Anspruch 1, **dadurch gekennzeichnet, dass** die Trennwände (29, 30) bewegbar sind zwischen einer oberen Position, in der Nestböden und Eiersammelflächen durch die Trennwände (29, 30) voneinander getrennt sind, und einer unteren Position, in der die Trennwände versenkt sind, so dass Eier von den Nestböden auf die Eiersammelflächen rollen können.

8. Haltungseinrichtung nach Anspruch 1 oder einem der weiteren Ansprüche, **gekennzeichnet durch** Mittel zum Anheben der Trennwände (29, 30) in Abhängigkeit von der Bewegung der Eiersammelflächen.

9. Haltungseinrichtung nach Anspruch 8, **dadurch gekennzeichnet, dass** Trennwände (29, 30) und Eiersammelflächen über Nocken und Kurvenkonturen miteinander gekoppelt sind, derart, dass bei Bewegung der Eiersammelflächen Nocken und Kurvenkonturen aneinander vorbeigleiten und dabei die Trennwände (29, 30) angehoben oder abgesenkt werden.

10. Haltungseinrichtung nach Anspruch 9, **dadurch gekennzeichnet, dass** die Trennwände (29, 30) untere Ränder (34) mit Kurvenkonturen aufweisen, und dass die Legenesteinheit (10) mit Nocken versehen ist, welche unten an den Kurvenkonturen anliegen.

11. Haltungseinrichtung nach Anspruch 10, **dadurch gekennzeichnet, dass** die Trennwände (29, 30) entlang ihrer unteren Ränder (34) jeweils wenigstens zwei Einbuchtungen oder Ausschnitte (36) aufweisen, in denen die Nocken entlang gleiten.

12. Haltungseinrichtung nach Anspruch 1 oder einem der weiteren Ansprüche, **dadurch gekennzeichnet, dass** die Trennwände (29, 30) vertikal gerichtete Langlöcher (32) als Führungsmittel aufweisen.

13. Haltungseinrichtung nach Anspruch 1 oder einem weiteren Ansprüche, **dadurch gekennzeichnet, dass** die Legenester (16, 17) vorderseitig hochklappbare Anflugbalkone (23) aufweisen.

## Claims

1. Rearing device for laying hens, having at least one laying nest unit (10) according to the hand retrieval nest principle, wherein the laying nest unit (10) comprises two laying nests (16, 17) which are adjacent one another, the laying nests (16, 17) are located back to back or comprise a common rear side which furthermore separates the two laying nests (16, 17) from one another, and in a region between the laying nests (16, 17) at least one egg-collecting surface is provided underneath the rear side or the rear sides, **characterized in that** the egg-collecting surface comprises partition walls (29, 30) which can be raised in the region of transitions between the nest floors and the egg-collecting surface.

2. Rearing device according to Claim 1, **characterized in that** a common egg-collecting surface is provided for the two laying nests (16, 17) of a laying nest unit (10).

3. Rearing device according to Claim 1 or 2, **characterized in that** two egg-collecting surfaces which follow one another in the longitudinal direction are provided for four half nests (11, 12, 13, 14) of a laying nest unit (10).

4. Rearing device according to Claim 1 or to one of the further claims, **characterized by** means for discharging eggs out of the region between the laying nests (16, 17).

5. Rearing device according to Claim 1 or to one of the further claims, **characterized in that** the egg-collecting surface can be pulled out of the region between the laying nests (16, 17) in its longitudinal direction.

6. Rearing device according to Claim 1 or to one of the further claims, **characterized in that** the egg-collecting surface is part of a drawer (25, 26) which is held between the laying nests (16, 17).

7. Rearing device according to Claim 1, **characterized in that** the partition walls (29, 30) are movable between an upper position, in which the nest floors and egg-collecting surfaces are separated from one another by the partition walls (29, 30), and a lower position in which the partition walls are lowered so that eggs are able to roll from the nest floors onto the egg-collecting surfaces.

8. Rearing device according to Claim 1 or to one of the further claims, **characterized by** means for raising the partition walls (29, 30) in dependence on the movement of the egg-collecting surfaces.

9. Rearing device according to Claim 8, **characterized in that** partition walls (29, 30) and egg-collecting surfaces are coupled together by means of cams and curve contours in such a manner that during the movement of the egg-collecting surfaces cams and curve contours slide past one another and at the same time the partition walls (29, 30) are raised or lowered.

10. Rearing device according to Claim 9, **characterized in that** the partition walls (29, 30) comprise lower edges (34) with curve contours, and **in that** the laying nest unit (10) is provided with cams which abut against the curve contours at the bottom.

11. Rearing device according to Claim 10, **characterized in that** the partition walls (29, 30) comprise in each case along their lower edges (34) at least two indentations or cutouts (36) in which the cams slide along.

12. Rearing device according to Claim 1 or to one of the further claims, **characterized in that** the partition walls (29, 30) comprise vertically directed elongated holes (32) as guide means.

13. Rearing device according to Claim 1 or to one of the further claims, **characterized in that** the laying nests (16, 17) comprise fly-up perches (23) at the front which can be flipped up.

## Revendications

1. Installation pour l'élevage de poules pondeuses, comprenant au moins une unité de pondoir (10) selon le principe des nids de recherche manuelle, l'unité de pondoir (10) présentant deux pondoirs adjacents l'un à l'autre (16, 17), les pondoirs (16, 17) étant dos à dos ou présentant un côté arrière commun qui sépare par ailleurs les deux pondoirs (16, 17) l'un de l'autre, et dans une région entre les pondoirs (16, 17), en dessous du côté arrière ou des côtés arrière, au moins une surface de collecte d'oeufs étant prévue, **caractérisée en ce que** la surface de collecte d'oeufs présente, dans la région de transitions entre des fonds de nids et la surface de collecte d'oeufs, des parois pouvant être soulevées (29, 30).

2. Installation pour l'élevage selon la revendication 1, **caractérisée en ce qu'**une surface de collecte d'oeufs commune est prévue pour les deux pondoirs (16, 17) d'une unité de pondoir (10).

3. Installation pour l'élevage selon la revendication 1 ou 2, **caractérisée en ce que** deux surfaces de collecte d'oeufs situées l'une derrière l'autre dans la direction longitudinale sont prévues pour quatre demi-pondoirs (11, 12, 13, 14) d'une unité de pondoir (10).

4. Installation pour l'élevage selon la revendication 1 ou selon l'une quelconque des autres revendications, **caractérisée par** des moyens pour éjecter des oeufs de la région entre les pondoirs (16, 17).

5. Installation pour l'élevage selon la revendication 1 ou selon l'une quelconque des autres revendications, **caractérisée en ce que** la surface de collecte d'oeufs peut être ressortie dans sa direction longitudinale hors de la région entre les pondoirs (16, 17).

6. Installation pour l'élevage selon la revendication 1 ou selon l'une quelconque des autres revendications, **caractérisée en ce que** la surface de collecte d'oeufs fait partie d'un tiroir (25, 26) retenu entre les pondoirs (16, 17).

7. Installation pour l'élevage selon la revendication 1, **caractérisée en ce que** les parois de séparation (29, 30) peuvent être déplacées entre une position supérieure dans laquelle des fonds de nids et des surfaces de collecte d'oeufs sont séparés les uns des autres par les parois de séparation (29, 30), et une position inférieure, dans laquelle les parois de séparation sont renfoncées, de telle sorte que des oeufs puissent rouler depuis les pondoirs jusque sur les surfaces de collecte d'oeufs.

8. Installation pour l'élevage selon la revendication 1 ou selon l'une quelconque des autres revendications, **caractérisée par** des moyens pour soulever les parois de séparation (29, 30) en fonction du déplacement des surfaces de collecte d'oeufs.

9. Installation pour l'élevage selon la revendication 8, **caractérisée en ce que** des parois de séparation (29, 30) et des surfaces de collecte d'oeufs sont accouplées les unes aux autres par le biais de cames et de contours de cames, de telle sorte que lors du déplacement des surfaces de collecte d'oeufs, des cames et contours de cames glissent les uns contre les autres et que les parois de séparation (29, 30) soient de ce fait soulevées ou abaissées.

10. Installation pour l'élevage selon la revendication 9, **caractérisée en ce que** les parois de séparation (29, 30) présentent des bords inférieurs (34) avec des contours de cames et **en ce que** l'unité de pondoir (10) est pourvue de cames qui s'appliquent par le dessous contre les contours de cames.

11. Installation pour l'élevage selon la revendication 10, **caractérisée en ce que** les parois de séparation (29, 30) présentent à chaque fois le long de leurs bords inférieurs (34) au moins deux renfoncements ou découpes (36) dans lesquels ou lesquelles glissent les cames.

12. Installation pour l'élevage selon la revendication 1 ou selon l'une quelconque des autres revendications, **caractérisée en ce que** les parois de séparation (29, 30) présentent des trous oblongs orientés verticalement (32) en tant que moyens de guidage.

13. Installation pour l'élevage selon la revendication 1 ou selon l'une quelconque des autres revendications, **caractérisée en ce que** les pondoirs (16, 17) présentent du côté avant des balcons d'envol rabattables vers le haut (23).
